# EUROPÄISCHE PATENTSCHRIFT

(11) **EP 0 557 760 B1**
(45) Veröffentlichungstag und Bekanntmachung des Hinweises auf die Patenterteilung: **24.07.1996**
(21) Anmeldenummer: 93101782.6
(22) Anmeldetag: 05.02.1993
(51) Int. Cl.: H02G 9/06, H02G 3/04

(54) **Kabelkanal**
Cable conduit
Conduit pour câbles

(30) Priorität: 26.02.1992 DE 4205924
(43) Veröffentlichungstag der Anmeldung: 01.09.1993
(73) Patentinhaber: THYSSEN POLYMER GMBH, D-81601 München (DE)
(72) Erfinder: Bauer,Peter, W-8441 Konzell (DE); Helf,Walter, W-8440 Straubing (DE); Lorenz,Rudolf, W-8441 Haibach (DE)

(56) Entgegenhaltungen:
- EP-A- 0 388 797
- DE-A- 3 210 404
- DE-A- 3 304 333
- DE-A- 3 310 692
- DE-A- 3 834 939
- DE-C- 3 917 950
- DE-U- 9 202 507
- FR-A- 2 580 437

## Beschreibung

Die Erfindung bezieht sich auf einen Kabelkanal mit in das Erdreich pflügbaren Rohren mit mehreren umeinander faltbaren und untereinander mittels Stege zu einem Rohrverband verbundenen Kunststoffrohren, wobei zumindest die Stege eine gewisse Flexibilität aufweisen.

Kabelkanäle dieser Art bestehen aus einem Rohverband von mindestens drei Rohren, in die auf der Baustelle Kabel eingezogen werden. Der Rohrverband wird als Ganzes extrudiert und nach Verlassen der Kalibriereinrichtung des Extruders zum Transport auf eine Trommel gewickelt und am Verlegeort z.B mittels eines Pfluges direkt in das Erdreich verlegt, wo sie mit Kabeln belegt werden. Beim Verlegevorgang wird der Rohrverband so zusammengefaltet, daß die einzelnen Rohre des Rohrverbandes möglichst dicht aneinanderliegen, also eine bestimmte Ordnung annehmen.

Mit den DE-A- 33 10 692, DE-A- 33 30 449, DE-A- 33 04 333, DE-A- 39 04 828 sowie der EP A 0 231 504 sind bereits derartige Kabelkanäle vorgeschlagen worden, die aus jeweils einem Rohrverband von fünf bzw. sieben Rohren bestehen, die untereinander mittels in einer Ebene beidseitig an den Rohren angeordneten Stegen und Rasten bestehen. Ein Falten des Rohrverbandes ist dabei in beiden Richtungen möglich. Um einen solchen Rohrverband besser in einem Kabelkanalrohr unterbringen zu können, ist das mittlere Rohr des gestreckten Rohrverbandes größer (DE -A- 33 10 692) oder kleiner (DE -A- 33 30 449) ausgebildet.

Ein weiterer solcher Kunststoff-Rohrverband wurde mit der DE -C- 39 17 950 bekannt, bei dem tangential verlaufende, durchgehende Verbindungsstreifen vorgesehen sind. Zusätzlich benötigt dieser Rohrverband Stützkörper und Verriegelungsmittel. Auch aus der französischen Patentanmeldung FR-A-2 580 437 geht ein Rohrverband hervor, der nach mehreren Richtungen faltbar ist, oder relativ starr, als aus mehreren Rohren bestehender Rohverband ausgebildet ist, wobei die einzelnen Rohre mittels Stegen über ein Zentralrohr oder einen zentralen Knotenpunkt miteinander verbunden sind. Schließlich ist noch aus der DE -A- 33 04 333 ein Einsatz für ein Kabelkanalrohr, bestehend aus mehreren im Kanalrohr verlegbaren Schutzrohren, bekannt geworden, bei dem, ähnlich wie mit der DE -A- 33 10 692 vorgeschlagen, ein zentrales Rohr größeren Durchmessers mit mehreren, seitlich davon vorgesehenen Rohren kleineren Durchmessers über flexible Stege zu einem Rohrverband verbunden ist.

Beim Trommeln weisen solcherart ausgebildete Rohrverbände jedoch gewisse Nachteile auf. Einerseits sind sie nicht gut trommelbar, weil sie relativ viel Platz benötigen, andererseits können sie in zwei Richtungen gefaltet werden, bzw. sich beim Einpflügen verdrillen, was wiederum zu Problemen beim Belegen der Rohre mit Kabeln und dem Aufbringen von Verschluß-Stopfen am Kabel kanalende führt.

Die Erfindung, wie sie in den Ansprüchen beschrieben ist, löst die Aufgabe, einen solchen Rohrverband für Kabelkanäle zu schaffen, der sich sowohl leicht auf eine Trommel wickeln läßt, als auch nur nach einer Seite gefaltet werden kann, dessen Rohre vereinzelbar sein müssen und der Rohrverband selbst auf einfache Weise eingepflügt werden kann.

Die mit der Erfindung erzielten Vorteile sind die Faltbarkeit des gesamten Rohrverbandes zwangsweise nach nur einer Seite, einfache Trommelbarkeit mit nur minimalem Platzbedarf, ferner daß die Rohre des Rohrverbandes auf der Baustelle auf einfache Weise z.B. mittels eines Messers vereinzelbar sind, und daß außerdem das Aufbringen der Verschluß-Stopfen durch die stets gleiche Orientierung des Rohrverbandes im Kabelkanal vereinfacht ist.

Die Erfindung ist nachstehend anhand eines in den Abbildungen dargestellten Ausführungsbeispieles näher erläutert.

Es zeigt:
Fig. 1 einen aus drei Rohren bestehenden Rohrverband,
Fig. 2 den Rohrverband gem. Fig. 1 ausgelegt,
Fig. 3 einen solchen Rohrverband nach dem Einpflügen
Fig. 4 bis 11 Ausführungsvarianten der Fig. 1 bis 3,

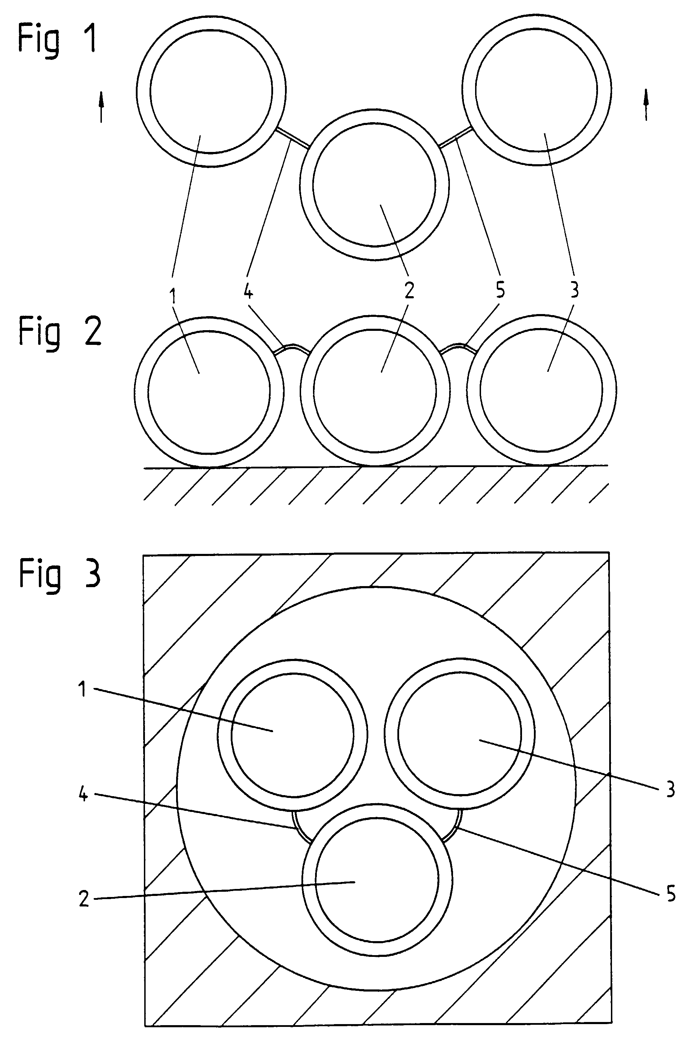

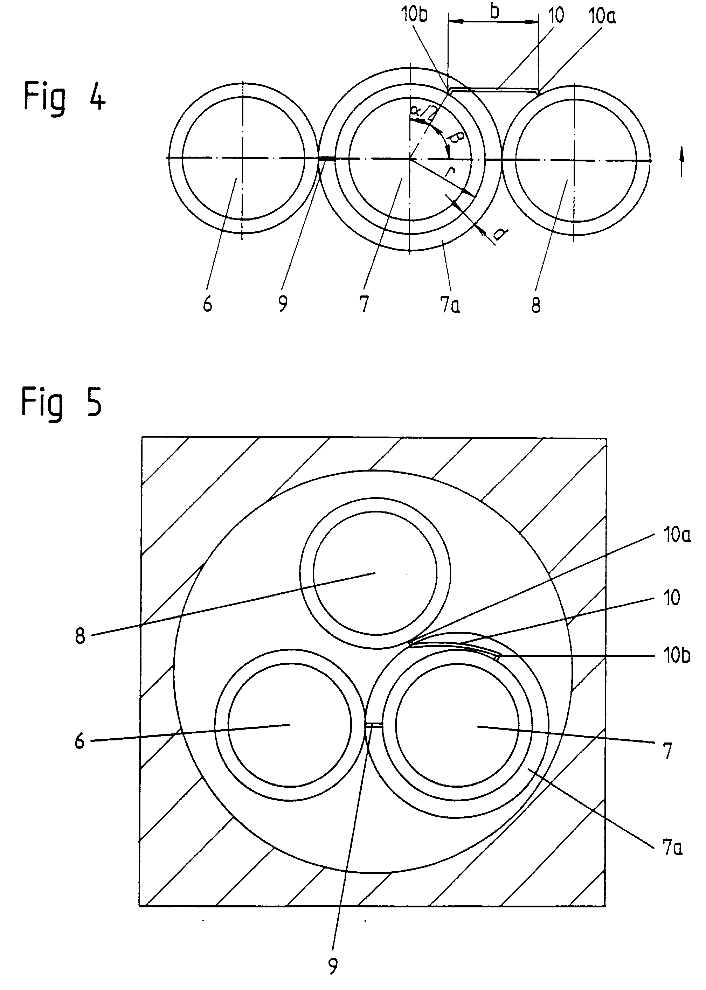

Wie aus der Fig. 1 ersichtlich, besteht der als Ganzes extrudierte Rohrverband aus den Rohren 1,2,3, die untereinander mittels flexiblen Verbindungsstegen 4 und 5 verbunden sind. Die Verbindungsstege können an den Rohren 7,8 auch über angeformte Streifen 10a, 10b gem. Fig. 4 und 5 verbunden sein, die vorzugsweise senkrecht auf der Rohrwand stehen. Diese Streifen sind mittels eines Messers oder dergl. von der Rohrwand abtrennbar, so daß die Rohre auch vereinzelbar sind.

Die Verbindungsstege 4,5 sind dabei, im ausgelegten Zustand, nicht in einer Ebene an den Rohren 1,2,3 vorgesehen, sondern in einem Winkel kleiner 180^{o}, vorzugsweise etwa 120^{o}, wobei sie ferner eine Länge besitzen, die mindestens einer Muffen-Wanddicke, jedoch maximal der Bogenlänge "b" plus der Muffen-Wanddicke d entspricht, bzw. mindestens der Wanddicke einer Rohrmuffe M und maximal der Summe aus Wanddicke der Rohrmuffe und dem Produkt aus der Summe der Rohrhalbmesser angrenzender Rohre und der Differenz von 1 minus dem Cosinus des Winkels um den der Anschluß für das äußere Rohr von einer Verbindungslinie der Rohrmittelpunkte abweicht. Dadurch ist es zwingend, den Rohrverband nur in einer Richtung (Pfeilrichtung) zu falten. Es ist somit eine zwangsweise vorgegebene Faltrichtung bereits beim Extrudieren gegeben, so daß weitere Maßnahmen zum Festlegen der einzelnen Rohre des Rohrverbandes, wie z.B. angeformte Rasten, Bänder oder Manschetten etc. überflüssig sind. Der Rohrverband kann daher in der zwangsweise vorbestimmten Ordnung seiner Rohre untereinander in den Kabelkanal gepflügt werden. Eine andere Ordnung des Rohrverbandes ist nicht möglich.

Die Fig. 4 und 5 zeigen eine Ausführungsvariante der Fig. 1 und 3. Dabei sind die Verbindungsstege 9 und 10 direkt an den Rohren 6 und 7 bzw. über Streifen 10 a und 10 b aus dem Rohr 7 und 8 vorgesehen. Es ist somit ersichtlich, daß der Verbindungssteg 9 die Mindestlänge der Wanddicke "d" der Muffe M und der Verbindungssteg 10 die maximale Länge, d.h. Bogenlänge "b" plus Muffenwanddicke "d" aufweist.

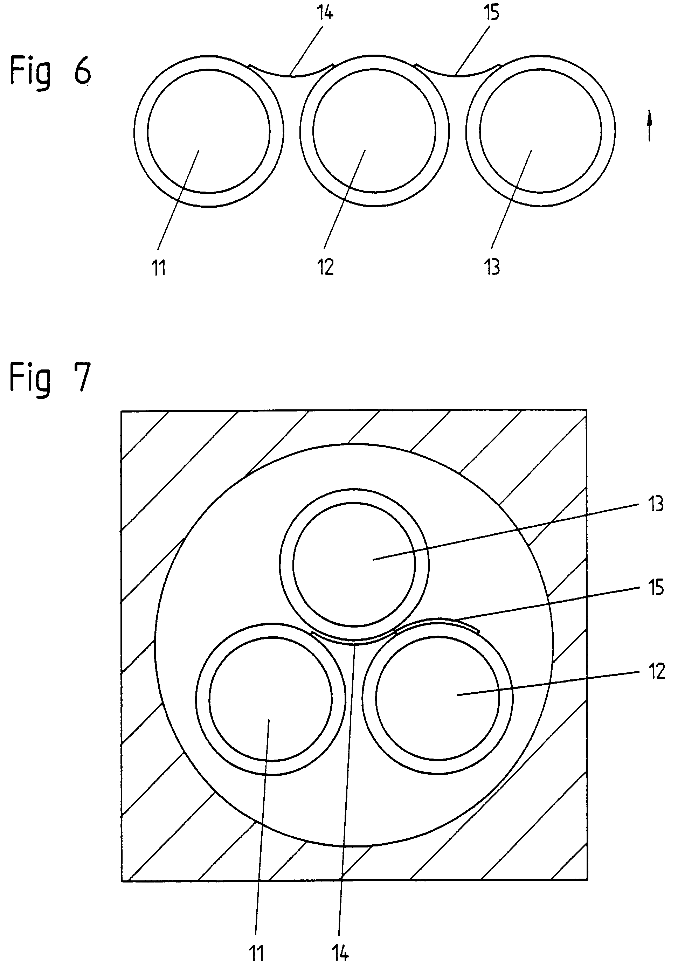

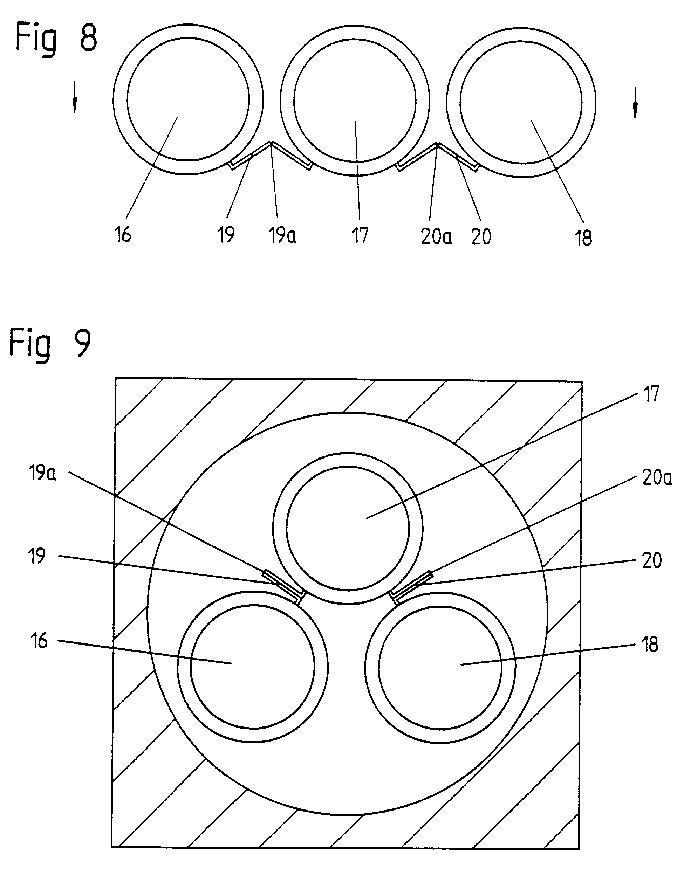

Die Figuren 6 bis 9 zeigen weitere Ausführungsvarianten der Verbindungsstege 14,15 an den Rohren 11,12,13. Die Verbindungsstege gem. Fig. 8 und 9 weisen die Verbindungsstege 19,20 an den Rohren 16,17,18 dabei Sollknickstellen 19a und 20a auf.

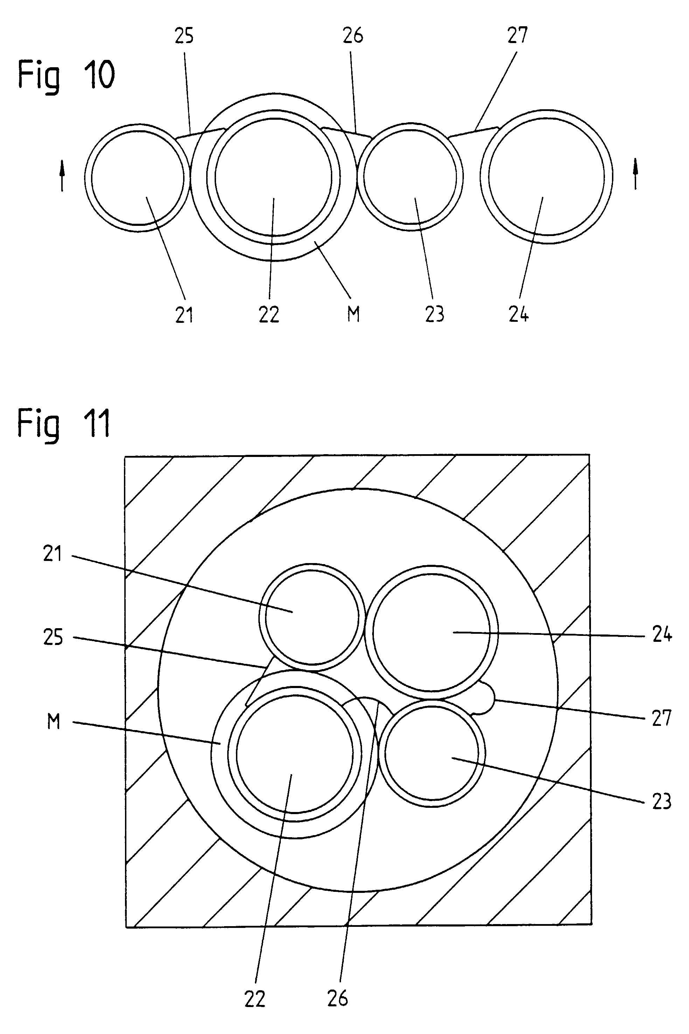

Es ist selbstverständlich, daß die Erfindung nicht auf einen Rohrverband mit drei Rohren und zwei Verbindungsstegen beschränkt ist. Es können vielmehr, je nach Bedarf, auch mehrere, mitttels Verbindungsstegen 25,26,27 verbundene Rohre, 21, 22,23,24 wie in Fig. 10 und 11 dargestellt, extrudiert und eingepflügt werden. Es ist dabei auch gleichgültig, ob es sich um Rohre gleichen oder unterschiedlichen Durchmessers handelt. Die größeren Rohre können dabei sowohl innerhalb des Rohrverbandes als auch an dessen Rändern vorgesehen sein.

## Patentansprüche

1. Kabelkanal bestehend aus in das Erdreich pflügbaren Rohren mit mehreren umeinander faltbaren und untereinander mittels Verbindungsstege (4,5,9,10,14,15,19,20,25,26,27) zu einem Rohrverband verbundenen Kunststoffrohren (1,2,3,11,12,13,16,17,18,21,22,23,24), wobei zumindest die Verbindungsstege (4,5,9,10,14,15,19,20,25,26,27) eine gewisse Flexibilität aufweisen und unter einem Winkel kleiner 180° an den inneren Rohren (2,7,12,17,22,23) und unter einem entsprechenden Winkel "β" an den äußeren Rohren (1,3,6,8,11,13,16,18,21,24) angeordnet sind,
**dadurch gekennzeichnet**,
- daß die Breite der Verbindungsstege(4,5,9,10,14,15,19,20,25,26,27) zwischen einem minimalen Wert und einem maximalen Wert liegt,
- daß der minimale Wert der Wanddicke (d) einer Rohrmuffe (M) entspricht, und
- daß der maximale Wert derart bestimmt ist, daß durch ihn und durch die Anordnung der Verbindungsstege(4,5,9,10,14,15,19,20,25,26,27) an den Rohren (1,2,3,11,12,13,16,17,18,21,22,23,24), der Rohrverband zwangsweise nur in einer vorgegebenen Richtung zusammengefaltet werden kann.

2. Kabelkanal nach Anspuch 1, **dadurch gekennzeichnet**, daß die Verbindungsstege (4,5) an den Rohren (1,2,3) mit kurzen, abgewinkelten Streifen befestigt sind, die Streifen gegenüber den Verbindungsstegen (4,5) unflexibel sind und auf der Rohrwand senkrecht stehen.

## Claims

1. Cable duct comprising pipes to be ploughed into the ground, with several pipes of plastic material (1, 2, 3, 11, 12, 13, 16, 17, 18, 21, 22, 23, 24) foldable around one another and connected among one another by means of connecting webs (4, 5, 9, 10, 14, 15, 19, 20, 25, 26, 27) to form a compound of pipes, at least said connecting webs (4, 5, 9, 10, 14, 15, 19, 20, 25, 26, 27) offering a certain flexibility and being arranged at an angle of less than 180° to the internal pipes (2, 7, 12, 17, 22, 23) and at a corresponding angle "β" to the external pipes (1, 2, 3, 11, 12, 13, 16, 17, 18, 21, 22, 23, 24),
**characterized in that**
- the width of said connecting webs (4, 5, 9, 10, 14, 15, 19, 20, 25, 26, 27) is between a mininum value and a maximum value,
- the minimum value corresponds to the wall thickness (d) of a pipe joint (M), and
- the maximum value is determined in such a way that in view of its value and in view of the arrangement of said connecting webs (4, 5, 9, 10, 14, 15, 19, 20, 25, 26, 27) on said pipes (1, 2, 3, 11, 12, 13, 16, 17, 18, 21, 22, 23, 24) said pipe compound can only be folded together forcibly in a predetermined direction.

2. Cable duct according to claim 1, **characterized in that** said connecting webs (4,5) are secured to said pipes (1,2,3) by means of short, angled strips, said strips being unflexible as compared to said connecting webs ( 4,5) and being positioned vertically on the pipe wall.

## Revendications

1. Conduite de câbles, comprenant des tuyaux en matière plastique (1, 2, 3, 11, 12, 13, 16, 17, 18, 21, 22, 23, 24) enterrables au moyen d'une charrue, raccordés par plusieurs entretoises de raccordement (4, 5, 9, 10, 14, 15, 19, 20, 25, 26, 27) pliables les unes autour des autres et réciproquement pour former un assemblage de tuyaux, au moins les entretoises de raccordement (4, 5, 9, 10, 14, 15, 19, 20, 25, 26, 27) offrant une certaine flexibilité et étant disposées aux tuyaux internes (2, 7, 12, 17, 22, 23) sous un angle plus petit que 180° et aux tuyaux externes (1, 3, 6, 8, 11, 13, 16, 18, 21, 24) sous un angle "β" correspondant,
**caractérisé en ce que**
- la largeur des entretoises de raccordement (4, 5, 9, 10, 14, 15, 19, 20, 25, 26, 27) se trouve entre une valeur minimale et une valeur maximale,
- la valeur minimale correspond à l'épaisseur de paroi (d) d'un manchon de tuyau (M), et que
- la valeur maximale est déterminée de telle façon que l'assemblage de tuyaux ne peut être plié que forcément dans une direction prédéterminée par la valeur maximale et par la disposition des entretoises de raccordement (4, 5, 9, 10, 14, 15, 19, 20, 25, 26, 27) prévues sur les tuyaux (1, 2, 3, 11, 12, 13, 16, 17, 18, 21, 22, 23, 24).

2. Conduite de c'a'bles suivant la révendication 1, caractérisée en ce que les entretoises de raccordement (4,5) sont fixées aux tuyaux (1,2,3) au moyen de bandes courtes, angulaires, ces bandes étant inflexibles par rapport aux entretoises de raccordement (4,5) et étant positionnées verticalement sur la paroi de tuyau.
